# EUROPEAN PATENT SPECIFICATION

(11) **EP 1 594 202 B1**
(45) Date of publication and mention of the grant of the patent: **25.04.2007**
(21) Application number: 05106698.3
(22) Date of filing: 14.02.2003
(51) Int. Cl.: H02G 1/08

(54) **Cable installation**
Kabelverlegung
Installation de câbles

(30) Priority: 24.04.2002 GB 0209305
(43) Date of publication of application: 09.11.2005
(62) Divisional of application: 03704792.5
(73) Proprietor: International Business Machines Corporation, Armonk, NY 10504 (US)
(72) Inventor: HARLEY, Ian c/o IBM UK Limited, Winchester, Hampshire SO21 2JN (GB)
(74) Representative: Watson, Justine Nicola C.

(56) References cited:
- WO-A-00/60714
- DE-U1- 8 520 355
- GB-A- 2 378 212
- US-A- 3 166 810

## Description

### Technical field

The present invention relates to the installation of cabling.

### Background art

Twisted pair copper cabling has traditionally been used within buildings to carry voice and data to end-user equipment such as computers, telephones and the like and typically hundreds of metres of cabling has to be run above ceiling or under floor to reach that user equipment.

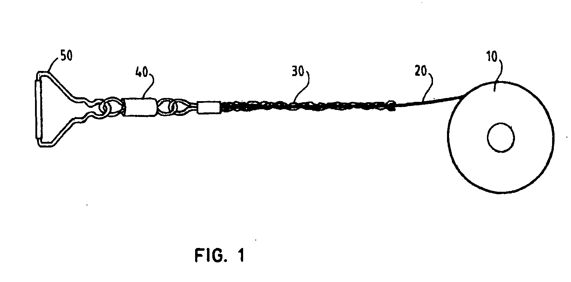

Figure 1 shows the components involved in installing such cabling according to the prior art. Installers typically pull such cables in from a drum 10 containing 500 metres of cable 20. The end of the cable 20 is placed in a pulling sock 30 made of a steel lattice and as the cable is pulled this lattice tightens around the length of cable it surrounds to securely grip it.

Potential damage to the cables during the installation process caused by over stretching of the twisted pair conductors inside the insulating sheath is a big problem. Over stretching causes the distance between the twisted pairs to be reduced giving rise to an increase in cross-talk and reducing the effectiveness of the cables. Thus a pulling fuse 40 or similar device (such as the magnetic linkage disclosed in copending patent application GB0118861.4) is used to prevent too great a force being applied to the cable during the installation process (the linkage is adapted to break when a predetermined force is applied and has to be reset before installation can continue). Attached to the other end of the pulling fuse via the fuse's quick release loop is a handle 50 used by the installers to manually pull the cable into position.

The onset of Cat 6 / 7 standards has placed demands on manufacturers for even greater performance and bandwidth. Cabling such as Shielded Foiled Twisted Pair (SFTP) has been developed to meet these increased demands. With such cabling, each twisted pair conductor is surrounded by a layer of aluminium foil. All the pairs are then covered by a further layer of foil and then a braided shield. This new configuration permits a higher transfer rate and is even more highly dependent upon the precise positioning of the twisted pair conductors within the cabling sheath.

The use of a pulling sock is not suitable for gripping these new cables for a number of reasons. Current pulling socks are designed for much thicker cables and it is physically difficult to make them small enough to grip the newer type of cable securely. Further, the length of the cable gripped by the pulling sock has to be thrown away. This is because, the gripping action of the sock is likely to have displaced the conductors within the cabling sheath and thus this part of the cable cannot be relied upon to work properly.

Further, the pulling sock is required to be relatively long in order to achieve a sufficient clamping force on the cable. This is because the sock's steel lattice only tightens around the cable as it is pulled. If the sock was any shorter, the cable might well have been pulled out of the sock before the steel lattice had a chance to grip it properly. The length of the pulling sock means that a large amount of cable is wasted.

WO 00/60714 discloses a device for connecting a wire or cable enabling the traction thereof. This device comprises a ring provided with one or several longitudinal grooves, an end piece provided with the same number of longitudinal grooves as in the ring and designed to fit inside said ring, whereby the longitudinal grooves in the end piece and the ring, when they are located opposite each other, form at least one housing that is adapted to the section of each wire, means (preferably by screwing) that lock the end piece inside the ring in an angular locking position where the corresponding grooves are offset in relation to the others, and protruding elements (threads on the inner side of the ring for example) that are adapted to grasp each wire of the cable in said locking position. This device can be used for drawing wires or electric cables in ducts or casings.

It is important when multiple cables are pulled that a symmetrical pulling force is exerted and that the tension on each cable is substantially identical. This is because, as previously mentioned, the cables are likely to be damaged if over stretched. Therefore a pulling fuse or similar device is used which will break if a predetermined force is applied during the pulling process and thus prevent the application of an excessive force. In order to ensure that the device severs at the correct point in time, the force applied is required to be a symmetrical one.

US 3,166,810 discloses a device for drawing or pulling electric cable through tubular conduits or the like. The device has a cylindrical body with a plurality of bores for receiving wire strands therein which are then secured with set-screws.

### Disclosure of the invention

Accordingly, the invention provides a device for pulling a plurality of cables, comprising a base and means for attaching each of the plurality of cables to the base, the attachment means comprising a first central attachment device and an even number of further attachment devices symmetrically surrounding the central device, wherein each attachment device is freely rotatable about an axis normal to the base.

Cable has a memory and can become twisted during the installation process. This can slow the process and can potentially lead to damage to the cable due to displacement of the internal conductors. This is the reason that each attachment means is freely rotatable about an axis normal to the base and thus can move with the cable. Preferably each attachment means comprises a quick-release loop to make their use as easy as possible.

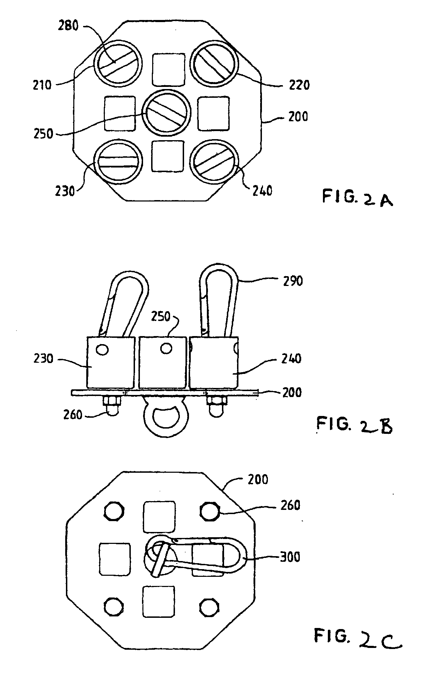

In a yet further aspect, the invention provides a device for pulling substantially as herein before described with reference to figures 2a, 2b and 2c.

### Brief description of the drawings

A preferred embodiment of the present invention will now be described, by way of example only, and with reference to the following drawings:

Figure 1 shows the components involved in installing cabling according to the prior art and as discussed hereinbefore;

Figures 2a, 2b and 2c show a device for pulling multiple cables in accordance with a preferred embodiment of the present invention.

### Mode(s) for carrying out the invention

Installers will often be pulling in four cables at a time, each gripped by a pulling sock. The combined weight of the four pulling socks, adds to the force that needs to be exerted to pull the cables into position. However if too great a force is exerted then the cables will be over stretched and thus their internal conductors damaged. As discussed above a pulling fuse or similar device is used which will break when a predetermined force is applied by installers and has to be reset before the installation can continue. Since the predetermined breaking force is typically low when pulling in the more fragile cables (e.g. 4 x 4 pair cables pulled in by hand = 125N), the lighter the cable gripping device is, the better. This is because a heavier device will encourage installers to exert more force during the installation process and thus they are more likely to have to reset the pulling fuse or similar device.

When pulling in multiple cables at once, it is also important that the pulling force exerted is symmetrical. Otherwise it is difficult to ensure that the pulling fuse or similar device will break at the correct predetermined force in order to avoid over stretching the cable. Figures 2a, 2b and 2c show a device for achieving such a symmetrical pulling force in accordance with a preferred embodiment of the present invention.

The device has an octagonal base 200. Four barrels 210, 220, 230 and 240 are placed symmetrically on the base 200 around a centre barrel 250. Each barrel is attached to the base by a swivel bearing 260 which permits each barrel to rotate freely about an axis normal to the base. The spacing of the barrels is chosen so as to ensure that they do not interfere with one another in use. A screw pin 280 is fixed across the diameter of each barrel and provides a point around which to attach a quick release loop 290. The cable loop formed from using the gripper device of the kind disclosed in EP Application 03702792.5 is looped over this loop 290 to attach it to the multiple puller device. The underside of the base (as shown in figure 2c) has a single quick release loop 300 attached thereto in register with the centre barrel 250. In use this is attached to the pulling fuse or similar device. (Of course, it may be attached directly to a handle or pulling rope, but this would risk an installer inadvertently damaging the cables by over stretching them.)

The positioning of the number of cables being pulled determines the choice of barrels. For example, an installer pulling four cables should use barrels 210, 220, 230 and 240. On the other hand if only three cables are being pulled, then barrels 210, 250, and 240 or barrels 220, 250 and 230 should be used. Because the barrels can swivel freely, the cable is less likely to become twisted during the installation process. This is important since twists hamper installation and can damage the cable itself. The position of the barrels is chosen such that a symmetrical pulling force can be achieved no matter how many cables (up to a maximum of five in this embodiment) are pulled in.

## Claims

1. A device for pulling a plurality of cables, comprising a base (200) and means for attaching each of the plurality of cables to the base (200), the attachment means comprising a first central attachment device and an even number of further attachment devices symmetrically surrounding the central device, wherein each attachment device is freely rotatable about an axis normal to the base (200).

2. The device of claim 1, wherein each attachment device comprises a quick-release loop (290).

3. The device of claim 1 or 2 comprising a quick release attachment loop (300) attached to the underside of the base (200) in register with the central attachment device.

## Patentansprüche

1. Einrichtung zum Ziehen einer Vielzahl von Kabeln, die eine Grundplatte (200) und ein Mittel zum Befestigen jedes aus der Vielzahl von Kabeln an der Grundplatte (200) umfasst, wobei das Befestigungsmittel eine erste zentrale Befestigungseinrichtung und eine gerade Anzahl weiterer Befestigungseinrichtungen umfasst, welche die zentrale Einrichtung symmetrisch umgeben, wobei jede Befestigungseinrichtung sich frei um eine zur Grundplatte (220) senkrechte Achse drehen kann.

2. Einrichtung nach Anspruch 1, bei der jede Befestigungseinrichtung eine schnell trennbare Schleife (290) umfasst.

3. Einrichtung nach Anspruch 1 oder 2, die eine schnell trennbare Befestigungsschleife (300) umfasst, die, ausgerichtet auf die zentrale Befestigungseinheit, an der Unterseite der Grundplatte (200) befestigt ist.

## Revendications

1. Un dispositif pour tirer une pluralité de câbles, comprenant une base (200) et des moyens de fixation, pour fixer chacun de la pluralité de câbles à la base (200), les moyens de fixation comprenant un premier dispositif de fixation central et un nombre pair d'autres dispositifs de fixation entourant symétriquement le dispositif central, dans lequel chaque dispositif de fixation est susceptible de tourner librement autour d'un axe perpendiculaire à la base (200).

2. Le dispositif selon la revendication 1, dans lequel chaque dispositif de fixation comprend une boucle à démontage rapide (290).

3. Le dispositif selon la revendication 1 ou 2, comprenant une boucle de fixation (300) à démontage rapide, fixée sur la face inférieure de la base (200), en alignement avec le dispositif de fixation central.
